Europäisches Patentamt

European Patent Office

Office européen des brevets

(1) Publication number: **0 036 819**
**B1**

(2) **EUROPEAN PATENT SPECIFICATION**

(45) Date of publication of patent specification: **13.03.85**

(21) Application number: **81400452.9**

(22) Date of filing: **23.03.81**

(51) Int. Cl.⁴: **C 08 F 2/10, C 08 F 2/48,**
**C 08 F 20/56**

(54) **Continuous polymerization process for preparing polymers and copolymers of ethylenically unsaturated water-soluble monomers.**

(30) Priority: **24.03.80 US 132726**
**02.06.80 US 155268**

(43) Date of publication of application:
**30.09.81 Bulletin 81/39**

(45) Publication of the grant of the patent:
**13.03.85 Bulletin 85/11**

(84) Designated Contracting States:
**AT BE CH DE FR GB IT LI LU NL SE**

(56) References cited:
**US-A-2 875 047**
**US-A-3 732 193**

(73) Proprietor: **CALGON CORPORATION**
**Route 60-Campbell's Run Road**
**Robinson Township Pennsylvania 15205 (US)**

(72) Inventor: **Ramsay, Wallace B.**
**378TB Chatham Park Drive**
**Pittsburgh Pennsylvania 15520 (US)**
Inventor: **Hunter, Wood E.**
**637 Beverly Road**
**Pittsburgh Pennsylvania 15243 (US)**
Inventor: **Kun, Kenneth A.**
**736 Valleyview Road**
**Pittsburgh Pennsylvania 15243 (US)**

(74) Representative: **Corre, Jacques Denis Paul et al**
**Cabinet Regimbeau 26, Avenue Kléber**
**F-75116 Paris (FR)**

**The file contains technical information submitted after the application was filed and not included in this specification**

Courier Press, Leamington Spa, England.

## Description

This invention relates to a process for the preparation of water-soluble polymers.

More particularly, this invention relates to a continuous polymerization process for the preparation of water-soluble polymers which utilizes a visible light initiation system, and to a continuous polymerization process for the preparation of water-soluble polymers which utilizes a combined visible light and thermal initiation system.

Many processes are known in the prior art for the preparation of water-soluble polymers. For example, water-soluble polymers have been prepared in solution, in suspension and in emulsion using chemical initiators. These processes, however, generally result in low conversion, low concentration of product and a lack of uniformity of product quality. In addition, various other polymerization processes have been proposed, as for example, photopolymerization processes such as those disclosed in U.S. Patent Nos. 2,850,445; 2,880,152 and 2,880,153, and high energy irradiation processes such as is disclosed in U.S. Patent No. 3,926,756. The above-referenced processes, however, suffer from a variety of disadvantages, such as high capital cost, low conversion, high energy requirements, low initial monomer concentration and numerous other problems.

Accordingly, it is an object of this invention to provide a process for the preparation of water-soluble polymers that permits use of high monomer concentrations.

It is a further object of this invention to provide a process for the preparation of water-soluble polymers that eliminates the need of nitrogen purging to remove oxygen from the system.

It is an additional object of this invention to provide a process for the preparation of water-soluble polymers which permits good control over the reaction exotherm.

It is a still further object of this invention to provide a process for the preparation of water-soluble polymers that reduces capital requirements and operating costs.

It is another object of this invention to provide a process for the preparation of water-soluble polymers that reduces energy requirements and increases the conversion of monomer to polymer.

These and other objects of this invention are accomplished by a process in which a visible light activated continuous polymerization system is used. The process of the present invention may be used to polymerize one or more ethylenically unsaturated monomers such as acrylamide, acrylic acid, quaternary ammonium compounds or the corresponding free amine, such as methacryloyloxyethyl trimethyl ammonium chloride, methacryloyloxyethyl trimethyl ammonium methylsulfate methacrylamido-3-propyl trimethyl ammonium chloride, 3-acrylamido-3-methyl butyl trimethyl ammonium chloride or 2-acrylamido-2-methyl propane sulfonic acid. The process may be used to prepare the free acid or the water-soluble salts of any of the aforementioned monomers. Aqueous monomer solutions are prepared and the monomer solution fed to the polymerization apparatus at a concentration in the range of from 25 to 75 percent, preferably 40 to 60 percent by weight. Polymers having molecular weights of at least 50,000, and preferably at least 1,000,000, as measured by viscometry, may be prepared by the process of this invention. These polymers may be dried and dissolved in water for use by a variety of conventional techniques.

As previously mentioned, the polymerization process of this invention is initiated by visible light or by a combination of visible light and one or more thermal initiators. Visible light may be defined as light having a wavelength in the range of approximately ($4\times10^{-7}$ to $7\times10^{-7}$ m 4000 to 7000 Angstroms). Accordingly, any photoreducible dye and weak reducing agent may be used. Suitable photoreducible dyes include thiazines such as methylene blue, thionene and methylene green, isoalloxazines and riboflavin or phthaleins such as eosin and rhodamine B. The concentration of the photoreducible dye in the monomer solution should be from $1\times10^{-7}$ to $1\times10^{-4}$ moles/liter.

Suitable reducing agents include amines such as triethanolamine and ethylenediaminetetraacetic acid, alcohols such as n-butanol, propylene glycol and glycerine, and sulfur compounds such as sodium metabisulfite. The concentration of the weak reducing agent in the monomer solution should be from $1\times10^{-5}$ to $1\times10^{-2}$ moles/liter. The preferred system is a mixture of methylene blue and triethanolamine in a molar ratio of 0.0000025 to 1, preferably 0.0005 to 0.002.

The use of a thermal initiator in conjunction with the visible light initiator enables the lights to be shut off after polymerization has been initiated and the exotherm has raised the temperature of the partially polymerized reaction media to a level sufficient to activate the thermal initiator. This reduces the energy requirements and permits higer conversion of monomer to polymer. When the process of this invention is carried out continuously, this permits the use of a smaller bank of lights. Suitable thermal initiators include free radical initiators such as ammonium persulfate, organic peroxides and azo compounds as, for example, azobisisobutyronitrile or 4-azobiscyanovaleric acid. The thermal initiator should be present in a concentration of from $1\times10^{-5}$ moles per liter to $1\times10^{-2}$ moles per liter, more preferably from $1.0\times10^{-4}$ moles per liter to $1\times10^{-3}$ moles per liter.

The polymerization process of the present invention is continuous and is preferably carried out on a continuous belt which is driven by two spaced apart rotating drums. The belt may be stainless steel or plastic and is preferably release coated with a suitable agent. Lights are positioned over the belt in such a manner as to provide the desired light intensity to the monomer/initiator mixture which is fed, at the desired thickness, onto the surface of the belt. Cooling or heating water may be sprayed against the underside of the belt to control the reaction temperature and the belt speed may be varied to control the reaction time.

The polymerization process of the present invention does not require a nitrogen purge. It may be carried out in an oxygen-containing environment such as air or in an inert gas such as nitrogen or argon, if desired.

Suitable light intensities include those in the range of 10,764 to 107,640 lux, preferably 43,056 to 107,640 lux, and may be supplied by any suitable source, as for example, incandescent floodlights. Initiation temperatures should be in the range of 5°C to 45°C, preferably 10°C. to 25°C., and film thickness should be in the range of 3,17 mm to 25,4 mm, preferably 6,35 mm to 12,7 mm, while reaction time should be in the range of 5 minutes to 120 minutes, preferably 40 minutes to 70 minutes, and pH should generally be in the range of 3.0 to 10.0, preferably 6.0 to 9.0.

The polymers produced in accordance with the process of the present invention may be recovered by conventional means. They may be heated at 50 to 150°C for a period of time to remove water, and be recovered as polymer gels or dry products.

It should be understood that those skilled in the art that these parameters will vary somewhat depending on the particular polymers being produced in accordance with the teachings of the present invention.

The process of the present invention may be illustrated by the following representative examples.

Example 1

A polymerization apparatus which comprises a continuous belt was adapted for photopolymerization by encasing the belt in a plywood box (3.66 meter long). Three rows of lights were installed in the box on 13.33 cm centers at a distance from the belt which results in a light intensity of 32,292 to 43,056 lux. The apparatus was equipped with cooling facilities on the underside of the belt.

Preparation of polyacrylamide

Acrylamide (33.40 kg) and deionized water (33.48 kg) were charged to 189.3 dm³ mix tank and agitated until uniform. Methylene blue (0.10 grams) and triethanolamine (40.86 grams) were added and mixed until dissolved. This solution was kept in the dark and purged with air to prevent polymerization.

The monomer mix was fed to the moving belt in a fashion to give a film having a thickness of 9.52 mm, while the lights were turned on and cooling was applied. As the monomer mix travelled the length of the belt, initiation was observed by an increase in temperature and color disappearance. Polymer formation was noted by the formation of a thick gel sheet. Temperature increased from 10°C. to a maximum of 80°C. The polymer sheet which exited the belt was ground and dried in a vacuum oven. The capillary viscosity measured at 0.005 g/100 ml 1 $M$ NaCl was 12 dl/g.

Example 2
Preparation of copolymer of acrylamide and sodium acrylate

Acrylamide (5.98 kg), deionized water (7.21 kg) and glacial acrylic acid (2.33 kg) were charged to a 189.3 dm³ mix tank. With agitation and cooling, the monomer solution was treated with 50 percent sodium hydroxide (2.58 kg) to a final pH of 8.0. Cooling was used to keep the temperature below 40°C. Methylene blue (0.041 grams) and triethanolamine (32.85 grams) were added and mixed until uniform.

The monomer solution was fed onto a moving moving belt at a thickness of 9.52 mm, and the lights turned on. Initiation was indicated by a temperature rise, solution decolorization and the formation of a thick gel sheet. Maximum temperature was 75°C. The polymer sheet which exited the belt was ground and dried in a vacuum oven. Capillary viscosity at 0.05 g/100 ml in 1 M NaCl was 26.5 dl/g.

Example 3
Preparation of copolymer of acrylamide and diallyldimethylammonium chloride

Acrylamide (9,44 kg) deionized water (21.92 kg) and diallyldimethylammonium chloride (12.48 kg) were charged to a 189.3 dm³ mix tank. Methylene blue (0.065 grams) and triethanolamine (26.31 grams) were added and mixed until dissolved.

The monomer solution was fed onto a moving belt at a thickness of 9.52 mm and the lights and cooling water turned on. Initiation was noted by a temperature rise, solution decolorization and formation of polymer gel. Maximum temperature was 60°C. The thick polymer gel which exited the belt was ground and dissolved in water to give an 8.3 percent polymer solution. Brookfield viscosity was >100 Pa.s.

Sludge dewatering activity on a Buchner funnel vacuum test was equivalent to commercial polymers.

Example 4
Preparation of copolymer of acrylamide and 2-acrylamido-2-methyl propane sulfonic acid

Acrylamide (16.63 kg), deionized water (21.99 kg) and 2-acrylamido-2-methyl propane sulfonic acid (5.39 kg) were charged to a 189.3 dm³ mix tank. With cooling, 50 percent caustic was added to a final pH of 8.0. Methylene blue (0.068 grams) and triethanolamine (27.29 grams) were added and mixed until dissolved.

The monomer solution was pumped onto the moving belt at a thickness of 9.52 mm. Cooling water and lights were turned on. Initiation was noted by a temperature rise, solution decolorization and formation of a thick gel sheet. Maximum temperature was 100°C. The polymer which exited the belt was ground and dried on a drum drier. The final dry polymer contained 3.7 percent moisture. A 0.1 percent solution had a Brookfield viscosity (No. 1 spindle at 30 rpm on Model LVF) of 0.124 Pa.s.

Measurement of friction reduction performance showed the polymer equivalent to commercial products.

Example 5

A polymerization apparatus which comprises a continuous belt was adapted for photopolymerization by encasing the belt in a plywood box (3.66 meter long). Three rows of lights were installed in the box on 13.33 cm centers at a distance from the belt which results in a light intensity of 32,292 to 43,056 lux. The apparatus was equipped with cooling facilities on the underside of the belt.

Acrylamide (33.40 kg) and deionized water were charged to a 189.3 $dm^3$ mix tank. With agitation, methylene blue (0.10 g) and triethanolamine (40.86 g) were added and mixed until dissolved. This solution was kept in the dark and purged with air to prevent polymerization.

The monomer mix was fed to the moving belt in a fashion to give a film thickness of 9.52 mm. As the monomer solution entered the belt, a solution of 4,4'-azobis-4-cyanovaleric acid (14.0 g) in deionized water (100 g) at pH 6.5 was added to it. The ratio of initiator solution to monomer solution was 0.008 g/g. As the monomer solution entered the belt, the lights were turned on and cooling applied. Initiation of polymerization was evidenced by a temperature rise and color disappearance. When the temperature reached 50°C., the lights were turned off. Polymerization continued to occur as evidenced by a continued temperature rise to 95°C. Conversion was 95.1 percent and the polymer had a reduced viscosity at 0.05 g/100 ml 1 $M$ NaCl of 11.2 dl/g.

Example 6
Effect of thermal initiator on residual monomer

Using the apparatus of Example 5, deionized water (7.21 kg) and glacial acrylic acid (2.34 kg were charged to a 189.3 $dm^3$ mix tank. With agitation and cooling, the monomer solution was treated with 50 percent sodium hydroxide (2.58 kg) to a final pH of 8.0. The temperature was kept below 40°C. for this neutralization. Methylene blue (0.041 g) and triethanolamine (32.85 g) were added and mixed until uniform.

The monomer solution was pumped onto the moving belt at a thickness of 9.52 mm, and the lights turned on. Initiation was indicated by a temperature rise, solution decoloration, and formation of a thick gel sheet.

For evaluation of the effect of thermal initiator on conversion, a solution of 4,4'-azobis-4-cyanovaleric acid (14.0 g) in deionized water (100 g) at a pH of 6.5 was fed into the monomer solution at a rate sufficient to give the desired solution concentration. Results are shown in Table I.

TABLE I

| Dye/TEA (M/M) | Concentration ACVA (moles/liter) | Conversion (percent) | Polymer reduced viscosity (dl/g) |
|---|---|---|---|
| $6 \times 10^{-6}/6 \times 10^{-3}$ | None | 89.8 | 21.2 |
| | $1.2 \times 10^{-3}$ | 96.8 | 25.1 |
| $12 \times 10^{-6}/12 \times 10^{-3}$ | None | 95.9 | 14.4 |
| | $2.0 \times 10^{-3}$ | 97.0 | 15.5 |

**Claims**

1. A continuous polymerization process for preparing polymers and copolymers of ethylenically unsaturated water-soluble monomers characterized in that it comprises:

(a) casting upon a continuous belt apparatus to form a film having a thickness of 3.17 mm to 25.4 mm an aqueous monomer solution having a monomer concentration of 25 percent to 75 percent by weight, said monomer solution also containing a photoreducible dye in a concentration of $1 \times 10^{-7}$ to $1 \times 10^{-4}$ moles/liter and a weak reducing agent in a concentration of $1 \times 10^{-5}$ to $1 \times 10^{-2}$ moles/liter;

(b) passing the solution under a series of lights which emit visible lights at an intensity of 10,764 to 107,640 lux and controlling the temperature of the monomer solution in the range of 5°C. to 45°C.; and

(c) allowing polymerization to occur in an atmosphere of air or an inert gaseous substance to form a thick polymer gel, wherein said polymers and copolymers are water-soluble and have molecular weights in excess of 50,000, as measured by viscometry.

2. A process as in claim 1, characterized by the additional step of recovering the polymeric product as a polymer gel or a dry product by heating at 50°C. to 150°C. for a time period to remove water.

3. A continuous polymerization process for preparing polymers and copolymers of ethylenically unsaturated water-soluble monomers characterized in that it comprises:

(a) casting upon a continuous belt apparatus to form a film having a thickness of 3.17 mm to 25.4 mm an aqueous monomer solution having a monomer concentration of 25 percent to 75 percent by weight, said monomer solution also containing a photoreducible dye in a concentration of $1 \times 10^{-7}$ to $1 \times 10^{-4}$ moles/liter, a weak reducing agent in a concentration of $1 \times 10^{-5}$ to $1 \times 10^{-2}$ moles/liter and a thermal initiator in a concentration of $1 \times 10^{-5}$ to $1 \times 10^{-2}$ moles/liter.

(b) passing the solution under a series of lights which emit visible light at an intensity of 10,764 to 107,640 lux and controlling the temperature of the monomer solution in the range of 5°C. to 45°C.;

(c) allowing polymerization to initiate in an atmosphere of air or an inert gaseous substance;

(d) shutting off the lights when the exotherm has increased the temperatures of the partially converted monomer solution to a level sufficient to activate the thermal initiator; and

(e) allowing the polymerization to be completed to a high degree of conversion, wherein said polymers and copolymers are water-soluble and have molecular weights in excess of 50,000 as measured by viscometry.

4. A process as in claim 3, characterized by the additional step of recovering the polymeric product as a polymer gel or a dry product by heating at 50°C. to 150°C. for a time period to remove water.

5. A process as in claim 1, wherein the molecular weight of said polymers and copolymers is at least 1,000,000 as measured by viscometry.

6. A process as in claim 3, wherein the molecular weight of said polymers and copolymers is at least 1,000,000, as measured by viscometry.

**Patentansprüche**

1. Kontinuierliches Polymerisationsverfahren zur Herstellung von Polymeren und Copolymeren ethylenisch ungesättigter wasserlöslicher Monomerer, dadurch gekennzeichnet, dass man

(a) eine wässrige Monomerenlösung von einem Monomerengehalt von 25 bis 75 Gew.%, die auch einen photoreduzierbaren Farbstoff in einer Konzentration von $1 \times 10^{-7}$ bis $1 \times 10^{-4}$ Mol/l und ein schwaches Reduktionsmittel in einer Konzentration von $1 \times 10^{-5}$ bis $1 \times 10^{-2}$ Mol/l enthält, auf ein endloses Band giesst, um eine Folie von einer Dicke von 3,17 mm bis 25,4 mm zu bilden,

(b) die Lösung unter einer Reihe von Lichtquellen hindurchleitet, die sichtbares Licht von einer Intensität von 10 764 bis 107 640 Lux emittieren, und die Temperatur der Monomerenlösung im Bereich von 5°C bis 45°C hält; und

(c) die Polymerisation in einer Atmosphäre von Luft oder einem Inertgas eintreten lässt, um ein dickes Polymergel zu bilden, dessen Polymere und Copolymere wasserlöslich sind und viskosimetrisch gemessene Molekulargewichte über 50 000 haben.

2. Verfahren nach Anspruch 1, gekennzeichnet durch die zusätzliche Stufe des Gewinnens des polymeren Produktes als Polymergel oder als Trockenprodukt, indem man eine Zeitlang auf 50°C bis 150°C erhitzt, um Wasser zu entfernen.

3. Kontinuierliches Polymerisationsverfahren zur Herstellung von Polymeren und Copolymeren ethylenisch ungesättigter wasserlöslicher Monomerer, dadurch gekennzeichnet, dass man

(a) eine wässrige Monomerenlösung von einem Monomerengehalt von 25 bis 75 Gew.%, die auch einen photoreduzierbaren Farbstoff in einer Konzentration von $1 \times 10^{-7}$ bis $1 \times 10^{-4}$ Mol/l, ein schwaches Reduktionsmittel in einer Konzentration von $1 \times 10^{-5}$ bis $1 \times 10^{-2}$ Mol/l und einen thermischen Initiator in einer Konzentration von $1 \times 10^{-5}$ bis $1 \times 10^{-2}$ Mol/l enthält, auf ein endloses Band giesst, um eine Folie von einer Dicke von 3,17 mm bis 25,4 mm zu bilden.

(b) die Lösung unter einer Reihe von Lichtquellen hindurchleitet, die sichtbares Licht von einer Intensität von 10 764 bis 107 640 Lux emittieren, und die Temperatur der Monomerenlösung im Bereich von 5°C bis 45°C hält.

(c) die Polymerisation in einer Atmosphäre von Luft oder einem Inertgas einleitet,

(d) die Lichtquellen abschaltet, wenn die exotherme Reaktionswärme die Temperatur der teilweise ungewandelten Monomerenlösung auf einen Wert erhöht hat, der ausreicht, um den thermischen Initiator zu aktivieren, und

(e) die Polymerisation bis zu einem hohen Umwandlungsgrad zu Ende führt, bei dem die Polymeren und Copolymeren wasserlöslich sind und viskosimetrisch gemessene Molekulargewichte über 50 000 haben.

4. Verfahren nach Anspruch 3, gekennzeichnet durch den weiteren Schritt der Gewinnung des polymeren Produktes als Polymergel oder als Trockenprodukt, indem man eine Zeitlang auf 50°C bis 150°C erhitzt, um Wasser zu entfernen.

5. Verfahren nach Anspruch 1, bei dem das viskosimetrisch gemessene Molekulargewicht der Polymeren und Copolymeren mindestens 1 000 000 beträgt.

6. Verfahren nach Anspruch 3, bei dem das

viskosimetrisch gemessene Molekulargewicht der Polymeren und Copolymeren mindestens 1 000 000 beträgt.

**Revendications**

1. Un procédé continu de polymérisation pour préparer des polymères et des copolymères de monomères solubles dans l'eau à insaturation éthylénique, caractérisé en ce qu'il consiste à:

(a) couler sur un appareil à courroie continue pour former une pellicule ayant une épaisseur de 3,17 mm à 25,4 mm, une solution monomère aqueuse ayant une concentration en monomère de 25 % à 75 % en poids, ladite solution monomère contenant également un colorant photoréductible à une concentration de $1 \times 10^{-7}$ à $1 \times 10^{-4}$ mol/l et un agent réducteur faible à une concentration de $1 \times 10^{-5}$ à $1 \times 10^{-2}$ mol/l;

(b) faire passer la solution sous une série de sources de lumière émettant une lumière visible avec une intensité de 10.764 à 107.640 lux et ajuster la température de la solution monomère dans la gamme de 5°C à 45°C; et

(c) laisser la polymérisation s'effectuer dans une atmosphère d'air ou d'une substance gazeuse inerte pour former un gel de polymère épais, dans lequel lesdits polymères et copolymères sont solubles dans l'eau et ont des poids moléculaires supérieurs à 50.000 comme mesuré par viscosimétrie.

2. Un procédé selon la revendication 1, caractérisé par le stade additionnel de récupération du produit polymère sous forme d'un gel de polymère ou d'un produit sec par chauffage entre 50°C et 150°C pendant une certaine période pour éliminer l'eau.

3. Un procédé continu de polymérisation pour préparer des polymères et des copolymères de monomères solubles dans l'eau à insaturation éthylénique caractérisé en ce qu'il consiste à:

(a) couler sur un appareil à courroie continue pour former une pellicule ayant une épaisseur de 3,17 mm à 25,4 mm, une solution monomère aqueuse ayant une concentration en monomères de 25 % à 75 % en poids, ladite solution monomère contenant également un colorant photoréductible à une concentration de $1 \times 10^{-7}$ à $1 \times 10^{-4}$ mol/l, un agent réducteur faible à une concentration de $1 \times 10^{-5}$ à $1 \times 10^{-2}$ mol/l et un amorceur thermique à une concentration de $1 \times 10^{-5}$ à $1 \times 10^{-2}$ mol/l;

(b) faire passer la solution sous une série de sources de lumière émettant une lumière visible avec une intensité de 10.764 à 107.640 lux et ajuster la température de la solution monomère dans la gamme de 5°C à 45°C;

(c) laisser la polymérisation s'amorcer dans une atmosphère d'air ou d'une substance gazeuse inerte;

(d) éteindre les sources de lumière lorsque la chaleur dégagée a élevé la température de la solution monomère partiellement transformée à une valeur suffisante pour activer l'amorceur thermique; et

(e) laisser la polymérisation s'achever à un degré élevé de conversion où lesdits polymères ou copolymères sont solubles dans l'eau et ont des poids moléculaires supérieurs à 50.000 comme mesuré par viscosimétrie.

4. Un procédé selon la revendication 3, caractérisé par le stade additionnel de récupération du produit polymère sous forme d'un gel de polymère ou d'un produit sec par chauffage entre 50°C et 150°C pendant une certaine période pour éliminer l'eau.

5. Un procédé selon la revendication 1, dans lequel le poids moléculaire desdits polymères et copolymères esb d'au moins 1.000.000 comme mesuré par viscosimétrie.

6. Un procédé selon la revendication 3, dans lequel le poids moléculaire desdits polymères et copolymères est d'au moins 1.000.000 comme mesuré par viscosimétrie.